# EUROPEAN PATENT APPLICATION

(11) **EP 1 094 423 A2**
(43) Date of publication of application: **25.04.2001**
(21) Application number: 00117805.2
(22) Date of filing: 18.08.2000
(51) Int. Cl.: G07F 7/10, G06F 12/14, G06K 19/073

(54) **Card observing method**

(30) Priority: 19.10.1999 JP 29625599
(71) Applicant: Hitachi, Ltd., Chiyoda-ku, Tokyo 101-8010 (JP)
(72) Inventor: Hirose, Takahiro, Hitachi Ltd., Intel. Prop. Group, Chiyoda-ku, Tokyo 100-8220 (JP); Kagimasa Toyohiko, Hitachi Ltd., Intel. Prop. Grp., Chiyoda-ku, Tokyo 100-8220 (JP); Maeoka, Jun, Hitachi Ltd., Intel. Prop. Group, Chiyoda-ku, Tokyo 100-8220 (JP)
(74) Representative: Strehl Schübel-Hopf & Partner

(57) **Abstract**

The present invention provides a card observing method which copes with the progress in, and the diversification of, unauthorized access methods. According to the present invention, an IC card is provided with an observation program updating unit (102), and an observation program (104) is loaded from an external terminal (110) into an erasable nonvolatile memory (206). When a new unauthorized access method is developed, the observation program (104) is updated so that it can detect unauthorized access.

## Description

### BACKGROUND OF THE INVENTION

The present invention relates to a technology for preventing the unauthorized use of an IC card.

An IC card is observed in various ways to detect unauthorized access from external. For example, the input of a pass word is observed. The method disclosed in JP-A-62-190585 and JP-A-62-280965 sets the maximum retry count of password checking to protect the card system from unauthorized access that is made by guessing the pass word. The method disclosed in JP-A-60-181888 stores an encrypted code in an IC card and checks if the encrypted code stored in the IC card matches the encrypted code sent from the terminal to prevent unauthorized access.

As technology advances, an unauthorized-access technology also advances. When a new unauthorized access technology is developed, the old observation system may not detect unauthorized access. Updating cards at shorter intervals may cope with the above problem, but it adds extra costs and gives inconvenience to users.

For a multi-application card, the items to be observed differ according to the types of applications loaded on the card. When a card is shipped, it is difficult to decide which items to be observed.

### SUMMARY OF THE INVENTION

It is an object of the present invention to provide a card observing method which can cope with the progress and the diversification of IC card unauthorized-access means. For use in the IC card system, the method according to the present invention allows an observation program to be downloaded dynamically from the server, allocates the program observing external unauthorized access into an erasable memory, and rewrites the program in accordance with a change in the observing method.

### BRIEF DESCRIPTION OF THE DRAWINGS

FIG. 1 shows the overall configuration of a Card observation system.
FIG. 2 shows the arrangement of the card observation system on a chip.
FIG. 3 shows the configuration of an observation execution processor.
FIG. 4 shows the configuration of a power detection unit.
FIG. 5 shows the configuration of an observation program updating unit.
FIG. 6 shows an example of the configuration of an observation program.
FIG. 7 shows the file format of the observation program.
FIG. 8 shows the load procedure of the observation program.
FIG. 9 shows the observation procedure of card communication.
FIG. 10 shows the observation procedure of a card power.
FIG. 11 shows the configuration of an external terminal.
FIG. 12 shows the processing procedure of the external terminal.
FIG. 13 shows the configuration of an external observation program update server.
FIG. 14 shows the processing procedure of the external observation program update server.

### DESCRIPTION OF THE EMBODIMENT

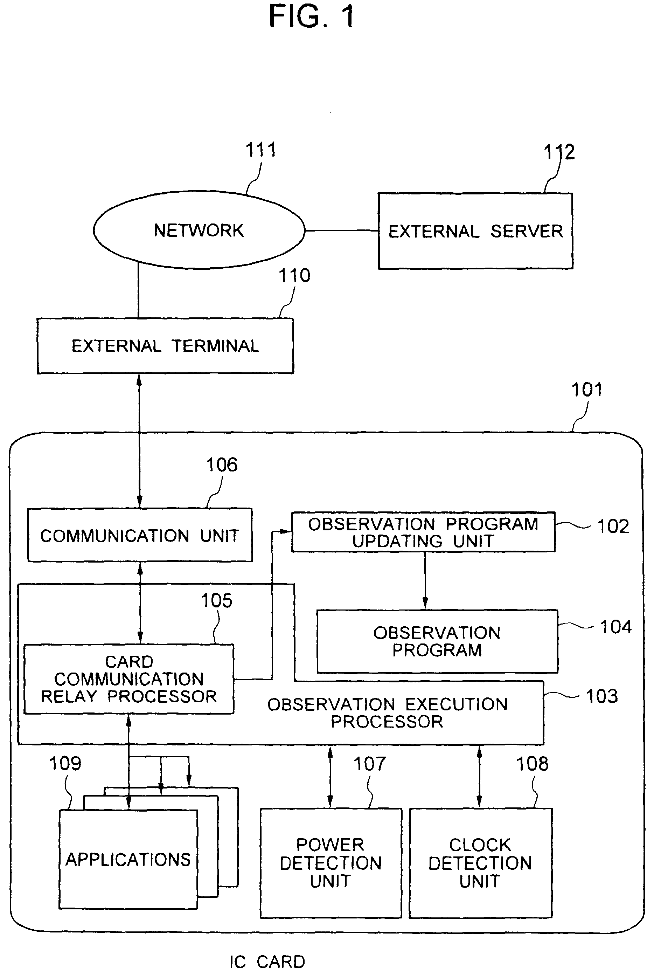

FIG. 1 shows the overall configuration of a card observation system. An IC card 101 communicates with a server 112 on an external network 111 via an external terminal 110. The IC card 101 includes a communication unit 106, an observation program updating unit 102, an observation execution processor 103, a power detection unit 107, and a clock detection unit 108. These units are implemented by hardware or by the software programs in the ROM. Applications 109 and an observation program 104 are stored in an erasable nonvolatile memory. Those applications 109 and a part of the observation program 104 that need not be altered may be stored in the ROM. The communication unit 106, with a physical contact with the external terminal 110, communicates with the devices external to the card. A card communication relay processor 105 within the observation execution processor 103 dispatches communication data among the communication unit 106, observation program updating unit 102, and applications 109. The observation program updating unit 102 loads the observation program 104 from external (server 112) via the network 111 into the nonvolatile memory within the card. The observation execution processor 103 is a software-implemented virtual machine executing the observation program 104. The observation program 104 observes the card running status via the observation execution processor 103 to detect unauthorized access. The power detection unit 107 provides the observation execution processor 103 with information on the variation pattern of the power current and the power voltage. The clock detection unit 108 provides the observation execution processor 103 with information on the clock variation status.

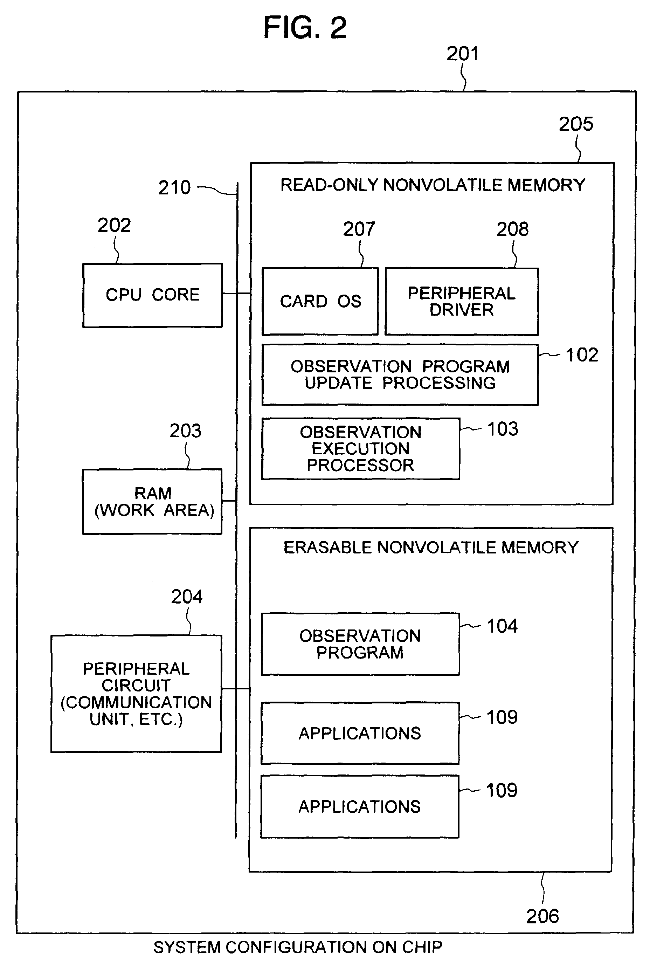

FIG. 2 shows the arrangement of the card observation system on the chip. The card system is implemented on a one-chip microcomputer 201. The microcomputer chip 201 includes thereon a CPU core area 202, a RAM area 203, a peripheral circuit area 204, a read-only nonvolatile memory area 205, and an erasable nonvolatile memory area 206, all interconnected via an internal bus 210. In some cases, these areas are mounted in blocks. The CPU core included in the CPU core area 202 executes code stored in memory to control the entire microcomputer chip. The RAM area 203 is a temporary data storage area (work area) used by the CPU core 202 to execute code. The peripheral circuit 204 may use a part of the data storage area as a temporary storage area. The peripheral circuit area 204 includes various processing circuits not included in the CPU core 202. For example, the communication unit 106 exchanging data between the chip and the external devices, the power detection unit 107, and the clock detection unit 108 are included in this area. The read-only nonvolatile memory area 205 includes a card OS 207, a peripheral driver 208, the observation program updating unit 102, and the observation execution processor 103. The erasable nonvolatile memory area 206 includes the observation program 104 and the applications 109. The erasable nonvolatile memory 206 is an EEPROM, a flash memory, a ferrodielectric substance memory, and so on. A part of the observation program 104 which need not be altered may be stored in the read-only nonvolatile memory 205.

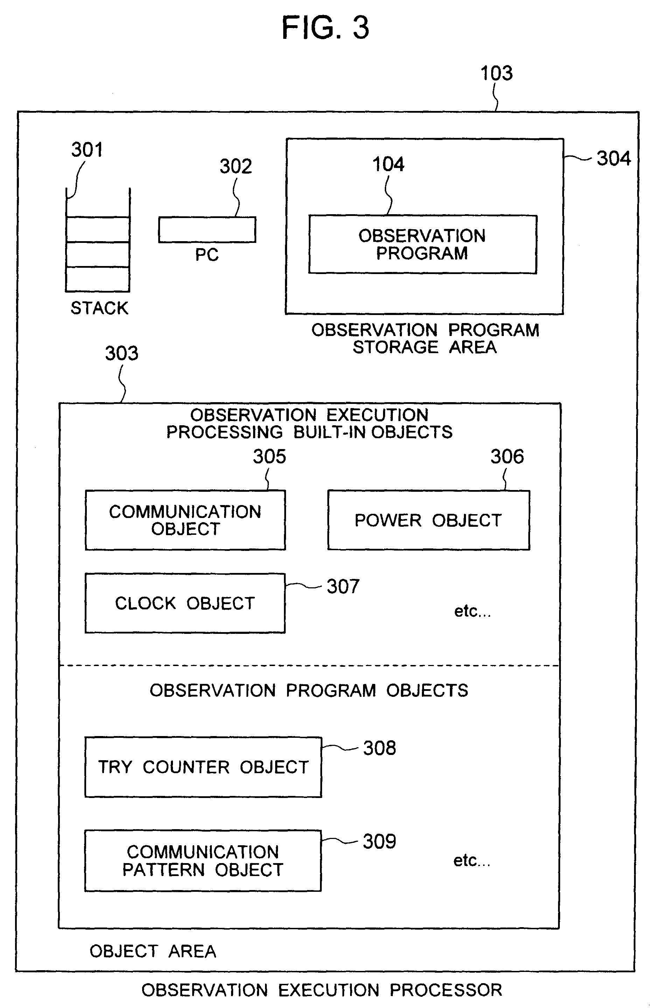

FIG. 3 shows the configuration of the observation execution processor 103. The observation execution processor 103 is a software-implemented virtual machine. The virtual machine monitors the behavior of the observation program 104. When the observation program 104 attempts unauthorized access, the virtual machine detects it and generates an exception signal. The virtual machine is divided roughly into four components: a stack 301, a program counter (PC) 302, an object area 303, and an observation program storage area 304. The stack 301 is a temporary storage area in which intermediate operation results are stored. The program counter 302 is a storage area in which the address of a virtual code in execution is stored. The observation program storage area 304, in which the virtual code of the observation program 104 is stored, is usually in the erasable nonvolatile memory 206. The object area 303 includes the objects necessary for the execution of the observation program 104. The objects are divided into two: observation execution processing built-in objects and observation program objects. The observation execution processing built-in objects act as an interface via which the observation program 104 accesses the devices in the IC card. Normally, the observation execution processing built-in objects are stored in the ROM and remain there from the time the IC card is initialized to the time the IC card is discarded. In the figure, a communication object 305, a power object 306, and a clock object 307 are shown as examples. The communication object 305 is used when the observation execution processor 103 executes the card communication relay processor 105. The power object 306 is used when the observation program accesses the power detection unit 107. The clock object 307 is used when the observation program accesses the clock detection unit 108. The observation program objects, which are generated by the observation program and normally stored in the erasable nonvolatile memory, are deleted at the same time the observation program which generated them is deleted. However, when the observation program is upgraded, the observation program objects are not deleted in many cases. In the figure, a try counter object 308 and a communication pattern object 309 are shown as examples. The try counter object 308 records the number of times the entered pass word does not match the correct one. The communication pattern object 309 has invalid external access patterns recorded therein.

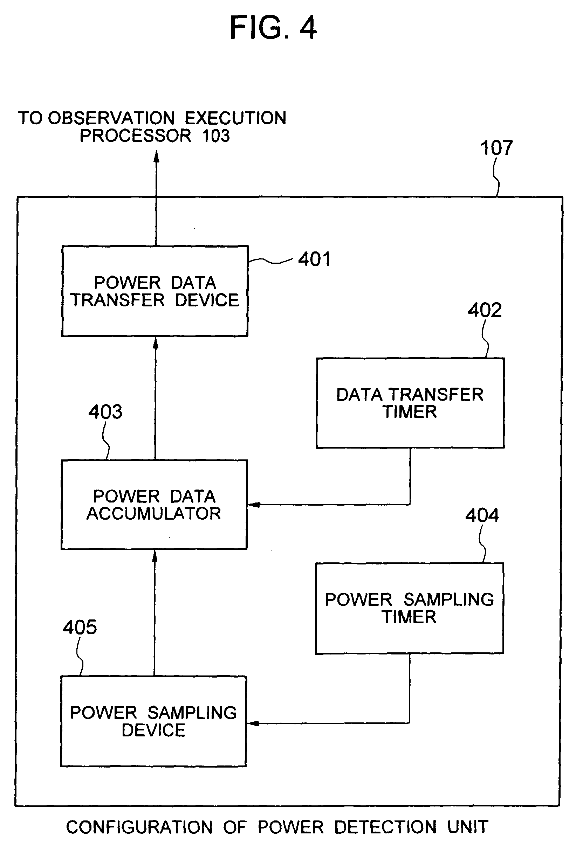

FIG. 4 shows the configuration of the power detection unit 107. A power sampling device 405 acquires the voltage value and the current value of the power in response to an instruction from a power sampling timer 404. The acquired data is sent immediately to a power data accumulator 403. The power sampling timer 404 regularly outputs a data acquisition instruction to the power sampling device 405. The time interval at which the power sampling timer 404 issues an instruction may be fixed or may be set by an instruction from the observation execution processor 103. The power data accumulator 403 accumulates data therein transferred from the power sampling device 405 and, after a predetermined amount of data is accumulated, passes the data to a power data transfer device 401. The timing in which data is passed is determined by an instruction from a data transfer timer 402. The time interval at which the data transfer timer 402 issues an instruction may be fixed or may be set by an instruction from the observation execution processor 103. The power data transfer device 401 converts data, received from the power data accumulator 403, to a format acceptable by the observation execution processor 103 and transfers the data to the observation execution processor. When converted to a byte row format, the power data may be checked during pattern match processing.

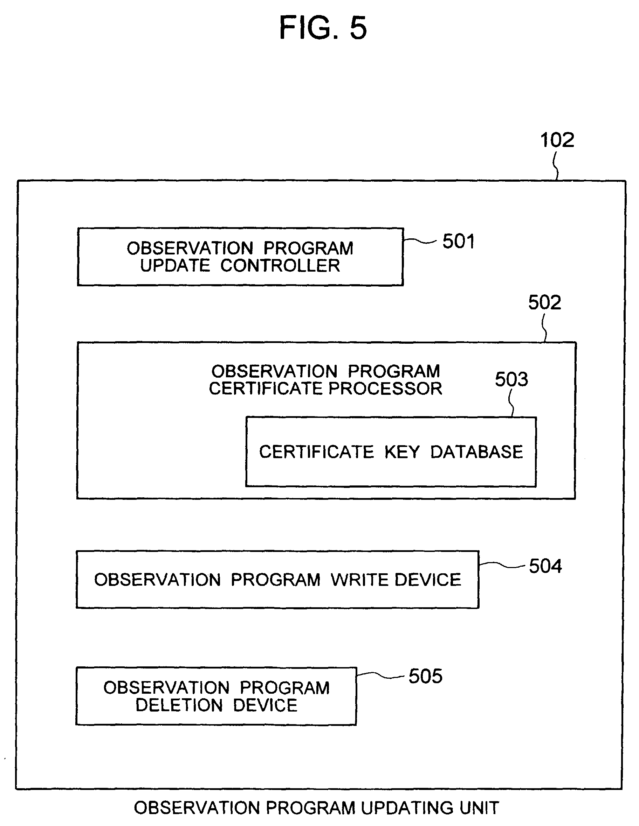

FIG. 5 shows the configuration of the observation program updating unit 102. An observation program update controller 501 starts the devices according to the update processing procedure to control the flow of entire update processing. An observation program certificate processor 502 checks the observation program 104 transferred from external and certifies the validity of the observation program. The observation program certificate processor 502, which includes a database 503 in which certificate keys are stored, selects an appropriate key from the certificate key database 503 and, using that key, certifies the observation program. An observation program write device 504 writes a certified observation program 104 into the observation program storage area 304 within the observation execution processor 103. An observation program deletion device 505 deletes an unnecessary observation program from the observation program storage area 304 within the observation execution processor 103 to release memory space.

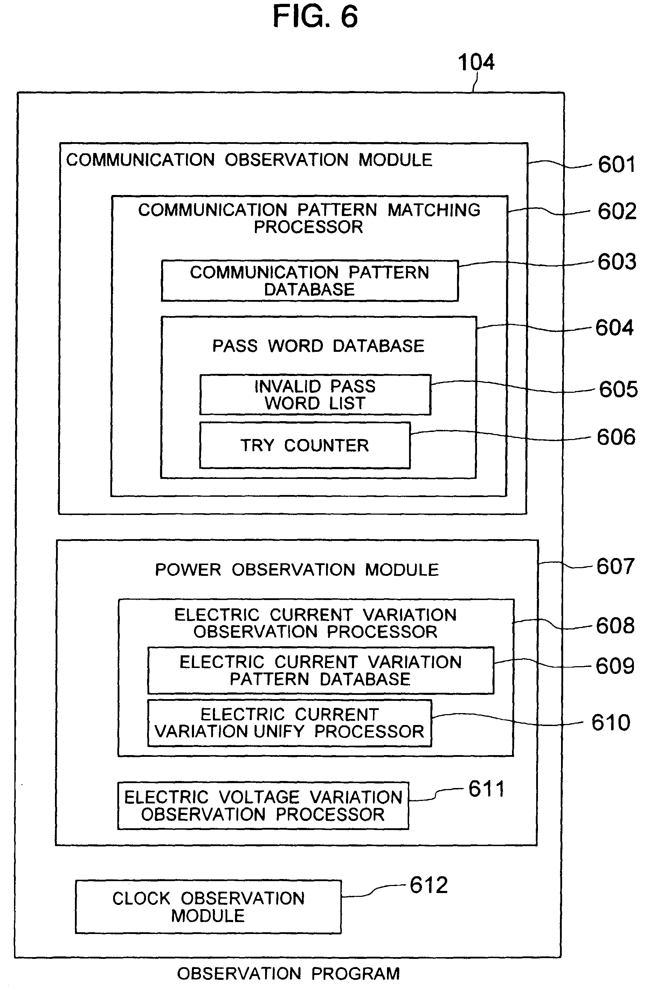

FIG. 6 shows the configuration of the observation program 104. Because the observation program 104 may be loaded from external (server 112) via the network 111, the contents of the observation program differ according to the IC card. The operation of the observation program will be described below using an example. The observation program 104 in the embodiment observes three items, that is, communication data, power variation, and clock variation, to detect unauthorized access. A communication observation module 601 acquires communication frames from the card communication relay processor 105 to observe that there is no unauthorized access from external. The communication observation module 601 includes a communication pattern matching processor 602 that checks communication frames. The communication pattern matching processor 602 includes a pass word database 604 and a communication pattern database 603. The pass word database 604 includes an invalid pass word list 605 and a try counter 606. The pass word database 604 is used to check pass word frames, while the communication pattern database 603 is used to check frames other than pass word frames. The checking procedure will be described later in detail. A power observation module 607 observes the power variation to prevent the contents of application processing from being guessed from the power variation. The power observation module 607 includes an electric current variation observation processor 608 and an electric voltage variation processor 611. The electric current variation observation processor 608 observes the current variation while referencing an electric current variation pattern database 609 and, as necessary, starts an electric current variation unify processor 610. The electric current variation unify processor 610 runs meaningless processing concurrently with an application to change the electric current variation pattern to prevent the behavior of the application from being guessed from the electric current consumption. A clock observation module 612 observes the clock variation in synchronization with the user input operation. When an extremely slow clock is received or the clock varies more than an allowable amount, the clock observation module executes the countermeasure means assuming that unauthorized access is made. The countermeasure means includes the blocking of the application, the blocking of the card, resetting of the card, and so on.

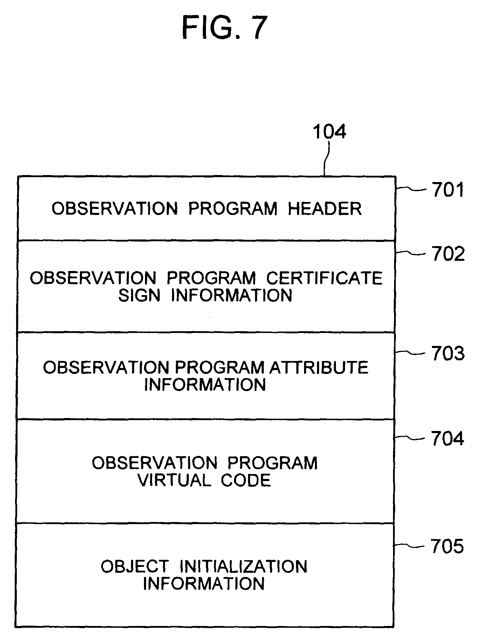

FIG. 7 shows the format of the observation program 104. The observation program starts with a header 701 in which the program version and the provider information are written. Observation program certificate sign information 702 includes information certifying that the observation program is valid. Normally, this information contains a sign encrypted by the private key of the observation program provider. Observation program virtual code 704 includes program code to be executed by the observation execution processor. Object initialization information 705 includes data to be used when the observation program is initialized. Observation program attribute information 703 includes information on the program size, resources, and so on.

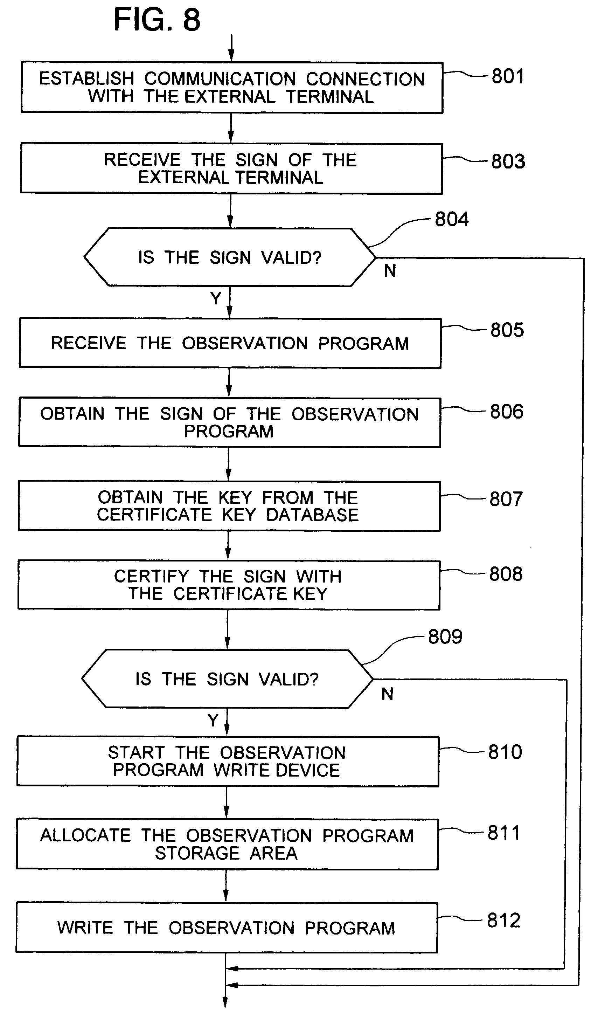

FIG. 8 shows the procedure for loading the observation program 104 from external for updating. In step 801, a communication connection with the external terminal 110 is established. The IC card terminal 110 performs physical communication with an IC card. The logical communication partner need not be the IC card terminal but may be a personal computer or the server 112 on the network 111. In step 803, the sign certifying the validity of the external terminal is received from the external terminal. In step 804, the sign is certified by the key stored in the certificate key database 503. If the sign is valid, control goes to step 805. If the sign is invalid, processing is terminated or the countermeasure means, such as the blocking of the IC card, is executed. In the figure, processing is terminated without executing any countermeasure means. In step 805, the file containing the observation program is received. In step 806, the sign 702 is obtained from the observation program file and certified by the key obtained from the certificate key database 503 (steps 807 and 808). If the sign is valid, control is passed from step 809 to step 810. If the sign is invalid, processing is terminated or the countermeasure means, such as the blocking of the IC card, is executed. In the figure, processing is terminated without executing any countermeasure means. In step 810, the observation program write device 504 is started and the loading of the observation program is started. In step 811, the observation program storage area 304 within the observation execution processor 103 is accessed to allocate a required area. In step 812, the observation program 104 is written in the allocated area. If some other initialization processing is necessary, that processing is executed.

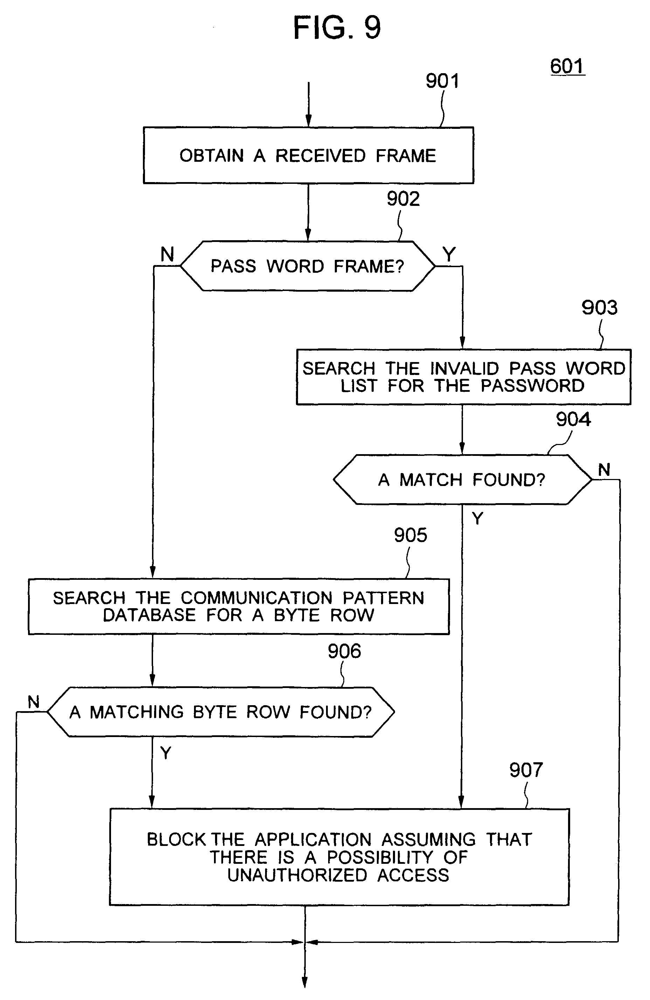

FIG. 9 shows the processing procedure of the communication observation module 601. In step 901, a received frame is acquired from the card communication relay processor 105. In step 902, the communication frame is checked. If the frame is a pass word frame, control is passed to step 903. If not, control is passed to step 905. In step 903, the module searches the invalid pass word list 605 for the received pass word. The invalid pass word list 605 contains numbers frequently used to guess the pass word, such as the date of birth, telephone number, and automobile registration number. If a match is found in the search in step 904, control is passed to step 907 assuming that an unauthorized user is guessing the pass word. In step 907, the countermeasure means is executed, for example, the corresponding application is blocked, the IC card is blocked, the card is reset, or the application is terminated abnormally. The communication pattern database 603 contains byte rows frequently used for unauthorized access. In step 905, the module searches the communication pattern database for a byte row in the communication frame. If the communication frame includes any of these byte rows, it is judged that there is a possibility of unauthorized access. In this case, control is passed from step 906 to step 907 and the countermeasure means is executed.

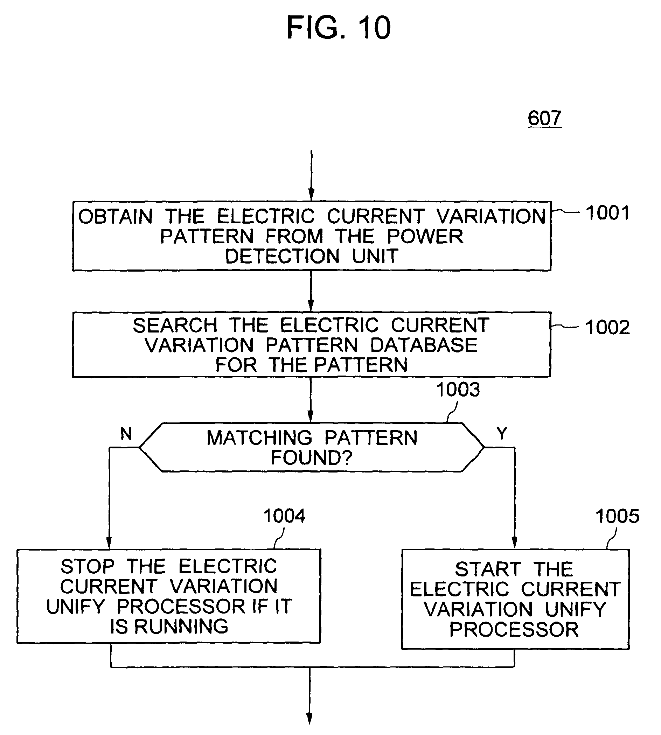

FIG. 10 shows the processing procedure of the power observation module 607. In step 1001, the power current variation pattern is obtained from the power detection unit 107. In step 1002, the module searches the power electric current variation pattern database 609 for the obtained power current variation pattern. Carefully examining the electric current consumption of the IC card system allows the application behavior to be guessed. Careless processing, if executed by the application, may result in an easy-to-guess electric current variation pattern. If such a pattern appears, control is passed from step 1003 to step 1005 to execute the countermeasure means. In this case, the electric current variation unify processor 610 is started in step 1005. Other countermeasure means includes the abnormal termination of the application program and the blocking of the application program. The electric current variation unify processor 610 is a routine which performs meaningless processing to change the electric current consumption. Running this routine in parallel with the application changes the electric current variation pattern to prevent the behavior of the application from being guessed from the electric current consumption. If there is no matching pattern, control is passed to step 1004 to stop the electric current variation unify processor 610. The electric current variation unify processor 610 has side effects. For example, it reduces the IC card processing speed or increases the IC card electric current consumption. Therefore, when the crisis is over, the processor may be stopped. In a security-critical situation, it is better to have the processor running until the application is terminated. For higher security, the processor may be in the active state all the time.

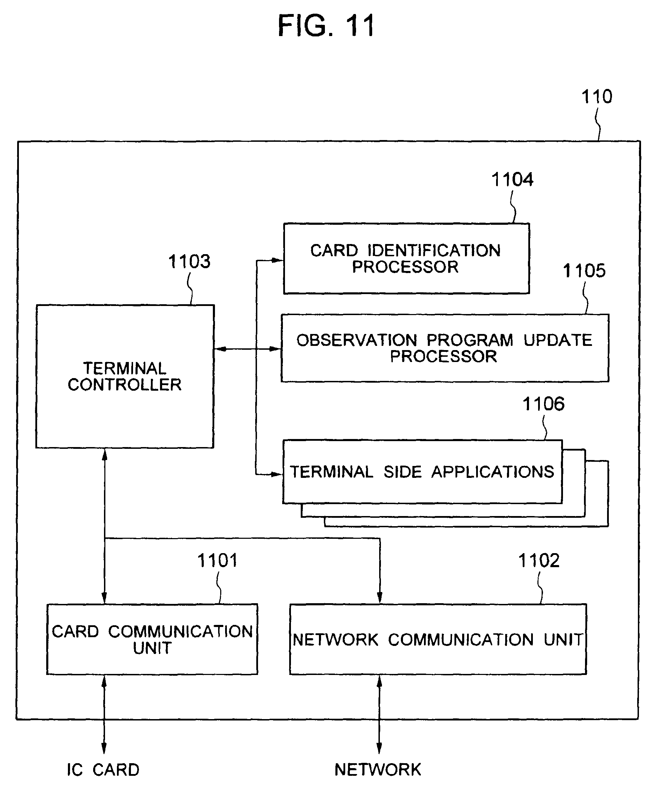

FIG. 11 shows the internal configuration of the external card terminal 110. The terminal 110, with a card communication unit 1101 and a network communication unit 1102, communicates the IC card and the external network, respectively. These communication units are controlled by a terminal controller 1103. The terminal controller 1103 starts and controls a card identification processor 1104, an observation program update processor 1105, and terminal side applications 1106. The card identification processor 1104 receives a response from the IC card and identifies the attribute of the IC card. If it is judged, based on the attribute, that the IC card has the observation program update function, control is passed to the observation program update processor 1105 for executing update processing. The observation program update processor 1105 establishes a communication between the IC card and the server and performs the update processing of the observation program. The update processing is performed not directly by the observation program update processor 1105 but by the IC card and the server. The observation program update processor 1105 converts data between the two and establishes a communication session. The terminal side applications 1106 work with the card side applications to execute applications.

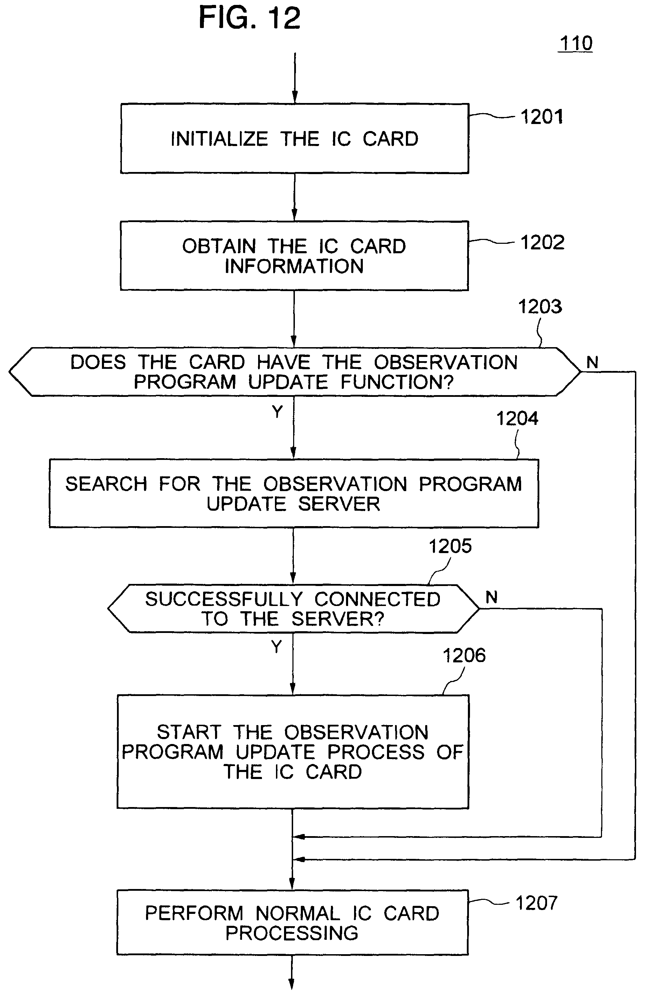

FIG. 12 shows the processing procedure of the external card terminal 110. In step 1201, when the terminal controller 1103 finds that the IC card is inserted, the controller starts the card communication unit 1101 and initializes the IC card. In step 1202, the terminal controller 1103 acquires card attribute information from the IC card via the card communication unit 1101 and transfers the acquired information to the card identification processor 1104. In step 1203, the card identification processor 1104 checks the transferred attribute information to determine if the IC card has the observation program update function. If the card does not have the observation program update function, control is passed to step 1207; if the card has the observation program update function, control is passed to step 1204 to start the observation program update processor 1105. In step 1204, the observation program update processor 1105 accesses the network communication unit 1102 via the terminal controller 1103 to search the network for the observation program update server 112. When the update server 112 is found, an attempt is made to connect to it. If a connection is made successfully to the server 112 in step 1205, control is passed to step 1206; if a connection is not made, control is passed to step 1207. In step 1206, the observation program updating unit 102 in the IC card is started. In this case, the card may issue a request for the certificate of the terminal. In such a case, the sign of the terminal is sent to allow the IC card to certify the terminal. If no request is issued from the IC card, no processing need be performed. Thereafter, the update processing is executed primarily between the IC card and the server. When the update processing is terminated, control is passed to step 1207. In step 1207, normal IC card processing is performed. An appropriate application is started according to a user's specification or the default setting. In the procedure shown here, the observation program is updated automatically before normal application processing is started. This allows the observation program to be always kept current invisibly to the user. In addition, the observation program updating unit 102 may be started in response to a user instruction to execute update processing.

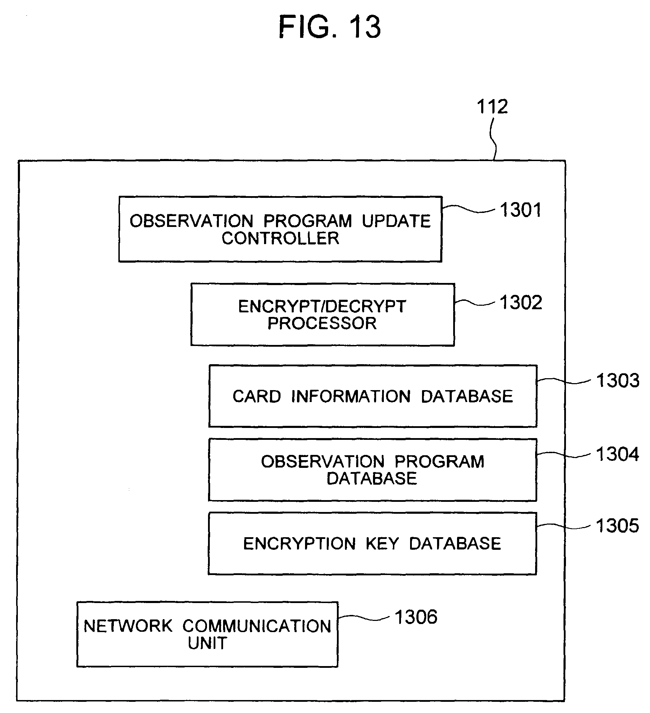

FIG. 13 shows the configuration of the external observation program update server 112. In general, the update server 112 is built on a general-purpose computer having the network function. A special hardware unit for databases or cryptogram may be added to the server. A network communication unit 1306 communicates with the IC card and the terminal over the network. An observation program update controller 1301 controls all the update processing of the observation program. An encrypt/decrypt processor 1302 attaches a sign to the observation program, encrypts the observation program, and decrypts the version information (described below). The update server 112 has a card information database 1303, an observation program database 1304, and an encryption key database 1305 to hold data necessary for processing. The card information database 1303 contains information on card attributes, card numbers, OS versions, the version of the observation program updating unit 102, and so on. The observation program database 1304 contains observation program version information and observation programs. Observation programs are indexed for quick retrieval of the observation program best suited for an IC card. The encryption key database 1305 contains encryption keys for adding a sign to observation programs, encrypting observation programs, decrypting version information, certifying IC cards, and so on.

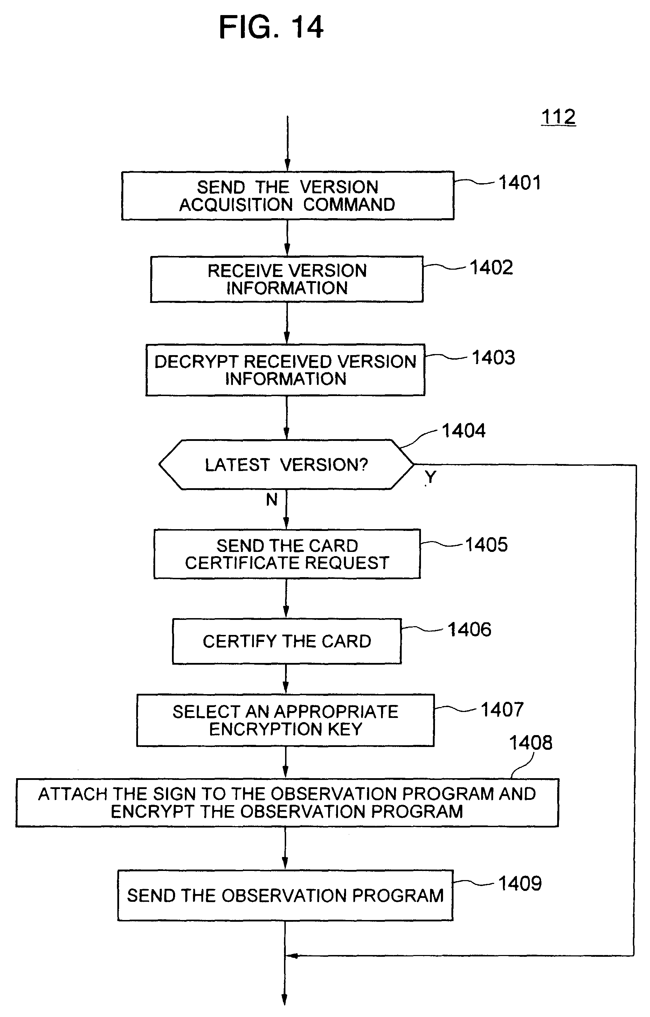

FIG. 14 shows the processing procedure of the external observation program update server 112. The update process on the server normally starts processing in response to a request from an IC card and a terminal. In step 1401, the version acquisition command is sent to the card from which the processing request is received. The version acquisition command requests the IC card to acquire the version information of the currently-running observation program 104. This command may be sent in the encrypted form or in plain text. In step 1402, the version information is received from the IC card. The version information of the observation program 104 is sent to the update server 112 in the encrypted form. A leakage of the version of the observation program 104 would give information to unauthorized users. Encrypting the version information prevents the observation program version from being leaked. In step 1403, an appropriate encryption key is selected by referencing the card information database 1303 and the encryption key database 1305 for decrypting the version information. In step 1404, the observation program database 1304 is referenced to check if the version of the observation program 104 on the IC card is the latest. If the version is the latest, the processing is terminated; if not, control is passed to step 1405. In step 1405, a certificate request is sent to the IC card to confirm that the IC card is valid. In step 1406, the sign returned from the IC card is certified. The certificate sign may be sent with the version information in step 1402. In this case, steps 1405 and 1406 are integrated into step 1403. This results in fewer communications between the IC card and the server, slightly increasing efficiency. In step 1407, the card information database 1303 and the encryption key database 1305 are referenced to select an encryption key for the IC card. The encryption key used to update the observation program is different from the key used to update applications. Normally, the key is longer than the application update key to protect the observation program from being updated incorrectly. An encryption algorithm providing a security level higher than that of application updating may be used. In step 1408, the latest observation program is retrieved from the observation program database 1304, and the sign is added to, or the observation program is encrypted, using the previously-selected encryption key. Instead of encrypting the whole observation program, the difference between the observation program with the same version as that of the observation program on the IC card and the latest observation program may be encrypted. Only the difference is sent to the IC card to rebuild the latest observation program on the IC card. This reduces the amount of communication. Finally, in step 1408, the encrypted observation program is sent to the IC card.

The present invention allows the observation program to be updated to the one capable of detecting new unauthorized access, thereby detecting unauthorized access and protecting an IC card.

## Claims

1. A card observing method for use in an IC card system, said method comprising the steps of:
allocating in an erasable memory (206) a program (104) observing unauthorized access from external; and
rewriting said observation program (104) according to a change in the observing method.

2. The card observing method according to claim 1 wherein the IC card system comprises a virtual machine (103) executing card observation and a unit (102) updating the card observation program to update and execute the observation program (104) securely.

3. The card observing method according to claim 2 wherein communication with applications (109) executed in said card system is observed.

4. The card observing method according to claim 2 wherein numbers frequently used as invalid pass words are compared with a pass word entered from an external terminal to detect unauthorized access, said numbers being stored in the program (104) observing unauthorized access.

5. The card observing method according to claim 4 wherein numbers unique to a user are used as an invalid pass word list (605).

6. The card observing method according to claim 4 wherein at least a part of numbers included in personal information of a card owner are used as an invalid pass word list (605).

7. The card observing method according to claim 2 wherein either an electric current consumption or an electric power consumption of said IC card system is checked if a variation pattern from which a system operation may be guessed appears and, if the variation appears, countermeasure means is executed.

8. The card observing method according to claim 7 wherein, if the variation pattern from which the system operation may be guessed appears, processing of an application (109) in execution is forced to suspend.

9. The card observing method according to claim 8 wherein, after the processing of the application (109) in execution is forced to suspend, the application (109) is disabled.

10. The card observing method according to claim 7 wherein, when the electric power or electric current variation pattern from which the system operation may be guessed appears, a process (610) which performs meaningless processing for unifying power consumption and electric current consumption is started to hide a system behavior.

11. The card observing method according to claim 3 wherein a byte row used frequently for unauthorized access is stored and, when the byte row appears in communication data, countermeasure means is executed.

12. The card observing method according to claim 1 wherein application update processing and observation program update processing are kept separate and wherein, during the observation program update processing, a key longer than, or a cryptography algorithm more powerful than, that for the application update processing is used.

13. The card observing method according to claim 1 wherein a difference between the observation program on an IC card and a latest observation program is sent to the card when the observation program is updated.

14. The card observing method according to claim 1 wherein version information on the observation program is sent, in encrypted form, from an IC card to a server.

15. The card observing method according to claim 1 wherein, at IC card startup, the observation program is updated before normal application processing is started.

16. An IC card system comprising:
means for allocating in an erasable memory (206) a program (104) observing unauthorized access from external; and
means for rewriting said observation program (104) according to a change in the observing method.

17. An IC card system comprising:
means for loading an observation program (104) from external and for allocating the observation program (104) in an erasable nonvolatile memory (206);
means for detecting unauthorized access; and
means for updating the observation program (104) based on a result of said detection.
